Europäisches Patentamt

European Patent Office

Office européen des brevets

(11) Veröffentlichungsnummer: **0 216 101 B1**

(12) **EUROPÄISCHE PATENTSCHRIFT**

(45) Veröffentlichungstag der Patentschrift: **03.07.91**  (51) Int. Cl.⁵: **E03C  1/00**

(21) Anmeldenummer: **86111074.0**

(22) Anmeldetag: **11.08.86**

(54) Pneumatische Steuervorrichtung für ein Absperrventil einer Vakuum-Abwasserleitung.

(30) Priorität: **27.08.85 DE 8524447 U**
**15.11.85 DE 8532297 U**

(43) Veröffentlichungstag der Anmeldung:
**01.04.87 Patentblatt 87/14**

(45) Bekanntmachung des Hinweises auf die
Patenterteilung:
**03.07.91 Patentblatt 91/27**

(84) Benannte Vertragsstaaten:
**BE CH DE FR LI NL**

(56) Entgegenhaltungen:
**DE-A- 2 652 878**
**DE-B- 2 462 295**
**FR-A- 734 502**
**US-A- 3 807 431**

(73) Patentinhaber: **Michael, Harald**
**Am Gosslers Park 9**
**W-2000 Hamburg 55(DE)**

(72) Erfinder: **Michael, Harald**
**Am Gosslers Park 9**
**W-2000 Hamburg 55(DE)**

(74) Vertreter: **Jochem, Bernd, Dipl.-Wirtsch.-Ing.**
**Patentanwälte Beyer & Jochem Postfach 17**
**01 45**
**W-6000 Frankfurt/Main(DE)**

## Beschreibung

Die Erfindung betrifft ein System zur Abförderung von Abwasser, wobei eine pneumatische Vorrichtung ein Absperrventil einer Unterdruck-Abwasserleitung steuert, welches durch ein Steuerventil bei einem bestimmten maximalen Wasserstand in einem Abwasser-Sammelbehälter zu öffnen und nach einer Zeitdauer wieder zu schließen ist, welche durch die Dauer der gedrosselten Belüftung eines unter Unterdruck stehenden Hohlraums bestimmt ist.

Ein System mit einer derartigen pneumatischen Steuervorrichtung ist in der DE-B-2 462 295 beschrieben. Sie hat einen verhältnismäßig komplizierten Aufbau, da sie außer zahlreichen in gegenseitiger Abhängigkeit umschaltbaren Ventilen auch einen besonderen Schaltservo umfaßt, der nach dem Auslösen der zum Öffnen des Membran-Absperrventils erforderlichen Schaltungen zunächst an die Unterdruckquelle angeschlossen wird, dadurch einen bestimmten Hub ausführt, anschließend über eine Drosselöffnung belüftet wird und dann im Verlauf des Absinkens das Öffnen des Absperrventils auslöst. Dieses wird dann unabhängig davon, ob das Abwasser abgesaugt worden ist, am Ende der Sinkbewegung des Schaltservos wieder. geschlossen.

Der Erfindung liegt daher die Aufgabe zugrunde, ein im Vergleich zu der bekannten Ausführung wesentlich einfacheres Steuersystem zu schaffen, und zur Lösung dieser Aufgabe wird vorgeschlagen, daß der gedrosselt belüftbare Hohlraum durch den mittels eines belasteten Membrankolbens dicht abgetrennten oberen Teil des Abwasser-Sammelbehälters oder eines mit diesem verbundenen Steigrohres gebildet ist, der Membrankolben bei steigendem Wasserstand durch vorübergehenden Anschluß einer Vakuumleitung an den Hohlraum, mittels eines Schwimmers oder durch das Luftvolumen über dem Wasserspiegel im Abwasser-Sammelbehälter angehoben wird und gleichzeitig in entsprechendem Maße das Luftvolumen aus dem Hohlraum abgeleitet wird, wobei während dieser Hubbewegung das Steuerventil durch den Membrankolben oder über ein durch ihn betätigbares Vorsteuerventil und eine pneumatische Stelleinrichtung des Steuerventils umgeschaltet und nach dem Absaugen des Abwassers aus dem Sammelbehälter zurückgeschaltet wird.

Der wesentliche Vorteil der Erfindung besteht darin, daß ein besonderer Schaltservo mit zugehörigen Anschlüssen als gesondertes Bauteil entfällt. Als Schaltservo dient erfindungsgemäß der obere Teil des Abwasser-Sammelbehälters selbst oder ein mit diesem verbundenes Steigrohr. Es bedarf auch nicht unbedingt eines steuerbaren Vakuumanschlusses zum Antrieb dieses Schaltservos, denn es kann hierfür die Bewegung des Wasserstands im Sammelbehälter oder Steigrohr ausgenutzt werden. Der ansteigende Wasserstand kann z. B. über einen Schwimmer oder über das zwischen dem Abwasser und dem Kolben eingesperrte Luftvolumen den Kolben mit nach oben nehmen, wobei die vom Kolben verdrängte Luft vorzugsweise über eine Rückschlagklappe oder ein Rückschlagventil aus dem belüftbaren Hohlraum entweichen kann.

Auch die Gegenbewegung des Kolbens nach unten braucht nicht durch einen besonderen Steuervorgang ausgelöst zu werden. Wenn nach dem Öffnen des Membran-Absperrventils der Wasserstand im Sammelbehälter sinkt, will sich automatisch auch der durch den Wasserstand angehobene Kolben wieder absenken. Dies ist jedoch nur in dem Maße und mit der Geschwindigkeit möglich, wie durch eine Drosselöffnung Luft in den ansonsten abgeschlossenen Hohlraum über dem Kolben eindringt. Durch geeignete Wahl des Querschnitts der Drosselöffnung kann somit die Zeitdauer der Absenkbewegung des Kolbens eingestellt werden.

In bevorzugter Ausführung sind die Rückschlagklappe, durch welche die Luft aus dem Hohlraum Ober dem Kolben entweicht, und die Drosselöffnung, durch welche anschließend wieder Luft in den Hohlraum eindringt, in einem einzigen Absperrorgan miteinander vereinigt.

Eine Vorrichtung mit nur dem genannten ersten Kolben funktioniert dann einwandfrei, wenn durch Steuerungsmaßnahmen dafür gesorgt wird, daß im Steigrohr kein Unterdruck entsteht. Ist jedoch dort beim Absaugen des angesammelten Abwassers kurzzeitig ein Unterdruck erwünscht, wird dadurch der Kolben nach unten beschleunigt und die Zeitsteuerung kann gestört werden. Damit nun die Steuervorgänge von einem Unterdruck im Sammelbehälter oder Steigrohr unbeeinflußt bleiben, ist in bevorzugter Ausgestaltung der Erfindung vorgesehen, daß im Sammelbehälter oder im Steigrohr unter dem ersten Kolben ein bei steigendem Wasserstand anhebbarer zweiter Kolben angeordnet ist, welcher bei seiner Hubbewegung den ersten Kolben durch losen Andruck von unten mitnimmt, aber unabhängig vom ersten Kolben absenkbar ist, und der Raum zwischen den beiden Kolben mit der Außenatmosphäre in Verbindung steht.

Diese Ausführung bietet den Vorteil, daß im Falle eines vorübergehenden Unterdrucks im Sammelbehälter oder Steigrohr beim Absaugen des angesammelten Abwassers nur der zweite, d.h. der untere Kolben nach unten gezogen wird, wobei Luft von der Außenatmosphäre in den Raum zwischen den beiden Kolben einströmen kann. Die für die Zeitsteuerung gebrauchte voreinstellbare Absenkbwegung des oberen Kolbens wird also durch den Unterdruck nicht beschleunigt.

In bevorzugter praktischer Ausgestaltung der Erfindung ist wenigstens einer der beiden Kolben ein Membrankolben und besteht aus einem in senkrechter Richtung geführten steifen Mittelteil und einer mit diesem dicht verbundenen, manschettenförmigen Membran, welche am äußeren Umfang dicht an die Wand des Sammelbehälters oder Steigrohrs angeschlossen ist. Zweckmäßigerweise ist dabei der zweite Kolben über einen mit seinem Mittelteil verbundenen Stempel gegen die Unterseite des Mittelteils des ersten Kolbens andrückbar und durch die Anlageflächen relativ zu diesem ausrichtbar.

In weiterer bevorzugter Ausgestaltung der Erfindung steht der Raum zwischen den beiden Kolben durch wenigstens ein Loch in der Wand des sammelbehälters oder Steigrohrs mit der Außenatmosphäre in Verbindung.

Im Gegensatz zu den Bewegungen des entsprechend den Änderungen des Wasserstands im Sammelbehälter heb- und senkbaren Kolbens sind die Schaltbewegungen eines oder mehrerer durch diesen Kolben gesteuerter Ventile verhältnismäßig klein. Damit deren Umschaltung jeweils nur in den Endphasen der Kolbenbewegung stattfindet, ist in weiterer bevorzugter Ausgestaltung der Erfindung vorgesehen, daß der Kolben über eine Steuerstange mit den durch ihn gesteuerten Ventilen verbunden ist, wobei diese Verbindung mit einem bestimmten Bewegungsspiel in Bewegungsrichtung versehen ist. Im einfachsten Fall wird durch den Kolben nur ein einziges Steuerventil hin- und her umgeschaltet, welches in seiner einen Schaltstellung das Membran-Absperrventil mit der Unterdruckquelle verbindet und dadurch öffnet, und in seiner anderen Schaltstellung die Betätigungseinrichtung des Membran-Absperrventils belüftet, so daß dieses wieder schließt. Das Membran-Absperrventil kann z.B. die in der DE-PS 1 6o9 245 oder der DE-OS 26 52 878 gezeigte Form haben. Die Gesamtanordnung und gegenseitige Verbindung zwischen dem Membran-Absperrventil und der hier beschriebenen Steuervorrichtung ergibt sich z.B. aus der genannten DE-PS 24 62 295. Im Hinblick auf die einwandfreie Funktion der gesamten Unterdruck-Entwässerungsanlage und des betreffenden Hausanschlusses empfiehlt es sich, das Membran-Absperrventil nur dann öffnen zu lassen, wenn ein genügend starker Unterdruck an diesem Hausanschluß vorhanden ist. In weiterer bevorzugter Ausführung der Erfindung ist deshalb vorgesehen, daß der mit dem Wasserstand im Abwasser-Sammelbehälter steigende und fallende Kolben über eine Steuerstange mit Bewegungsspiel mit einem Vorsteuerventil verbunden ist, welches bei angehobenem Kolben eine Unterdruckquelle mit einer pneumatischen Stelleinrichtung zur Umschaltung eines Steuerventils verbindet, wobei die Stelleinrichtung mit einer bestimmten, der öffnungsbewegung des Steuerventils eingegenwirkenden Kraft vorbelastet sein kann. Alernativ könnte auch der Unterdruck ständig am Steuerventil des Membran-Absperrventils anstehen. Bei Umschaltung des Vorsteuerventils durch den vom Wasserstand angehobenen Kolben wird dann lediglich die pneumatische Stelleinrichtung des Steuerventils mit Unterdruck beaufschlagt. Nur wenn dieser ausreichend stark ist, kann er die der Öffnungsbewegung des Steuerventils entgegengerichtete Kraft, die z.B. durch einen Schnapper ausgeübt wird, überwinden und dadurch das Öffnen des Membran-Absperrventils auslösen.

Um das Membran-Absperrventil nach einem Öffnungsvorgang wieder zu schließen, müssen sowohl das Steuerventil als auch das Vorsteuerventil in ihre Ausgangsstellung zurückgeführt werden. Vorzugsweise ist hierzu die Steuerstange derart mit Bewegungsspiel mit dem Ventilkörper des Steuerventils verbunden, daß dessen Öffnungsbewegung durch die pneumatische Stelleinrichtung, aber die Schließbewegung durch die Steuerstange, erfolgt.

Der Ventilkörper des Vorsteuerventils wird zwar durch die Steuerstange in Öffnungsrichtung bewegt, aber in bevorzugter Ausführung durch ein Gewicht in die Schließstellung zurückgeführt und in dieser gehalten.

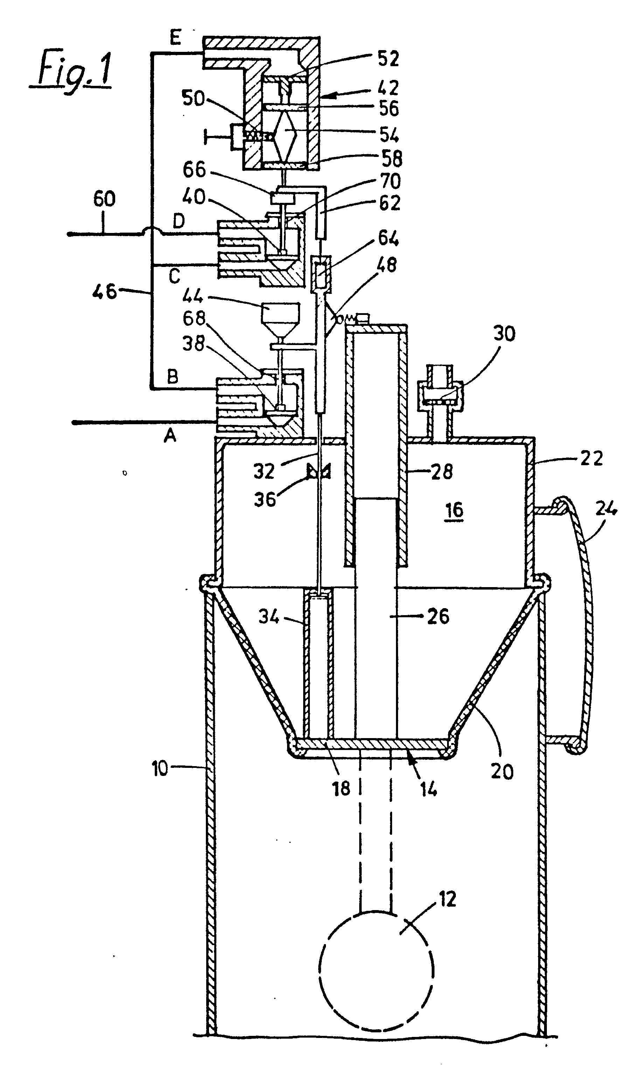

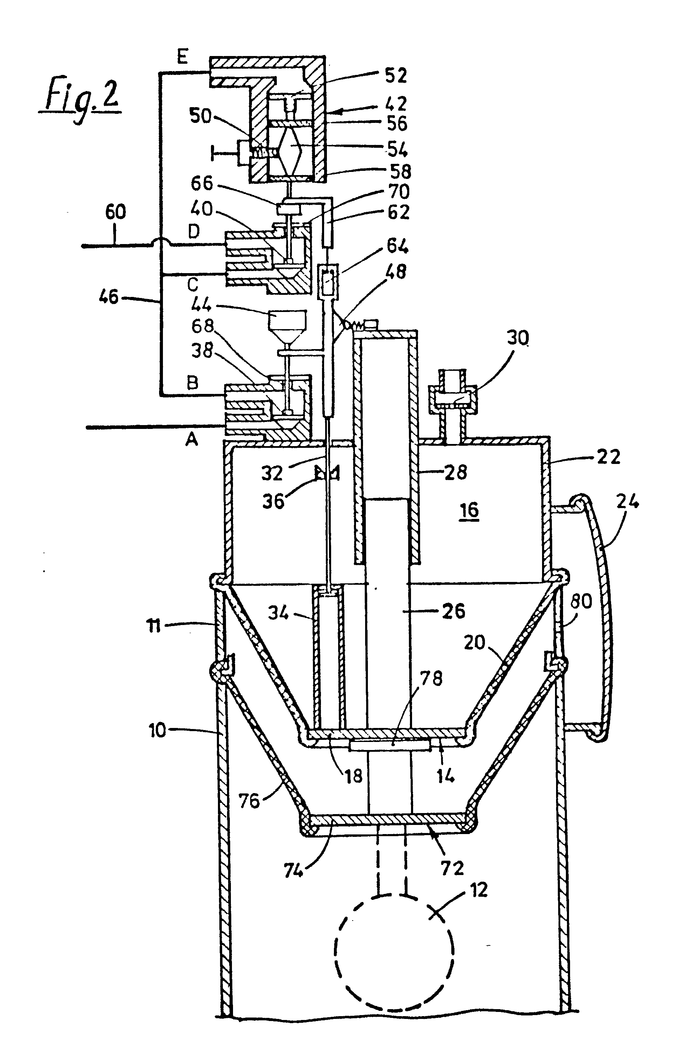

Die Erfindung wird nachstehend anhand zweier in den Figuren 1 und 2 dargestellter Ausführungsbeispiele näher erläutert. Danach ist auf der oberen Endwand eines Steigrohrs 10 eine Rückschlagklappe 30 angeordnet. Sie ist so ausgebildet, daß dann, wenn der Membrankolben 14 bei steigendem Wasserstand im Steigrohr 10 durch den Schwimmer 12 oder das eingesperrte Luftvolumen zwischen dem Wasserspiegel und dem Membrankolben 14 angehoben wird, das durch den Membrankolben 14 verdrängte Luftvolumen ungehindert aus dem Hohlraum 16 entweichen kann. Es entsteht also bei einer Aufwärtsbewegung des Membrankolbens 14 im Hohlraum 16 kein Überdruck.

Die Rückschlagklappe 30 ist mit einem kleinen Loch versehen, das eine Drosselöffnung darstellt. Wenn nach dem Absaugen des Abwassers aus dem Sammelbehälter und dem mit diesem verbundenen Steigrohr 10 der Membrankolben 14 durch das Gewicht 26 wieder nach unten gedrückt wird, senkt er sich in dem Maße und mit derjenigen Geschwindigkeit ab, wie es die durch das kleine Loch in der Rückschlagklappe 30 in den Hohlraum 16 einströmende Luftmenge zuläßt. Durch geeignete Wahl der Größe des Lochs in der Rückschlagklappe 30 kann die Öffnungsdauer des Absperrventils zwischen der Unterdruck-Entwässerungsleitung und dem Sammelbehälter bestimmt werden. Auf diese Weise kann festgelegt werden, ob das durch die gezeigte Steuervorrichtung betätigte Absperrventil solange öffnet, daß nicht nur das im Sammelbehälter angesammelte Abwasservolumen, sondern anschließend auch noch ein bestimmtes Luftvolumen in die Unterdruck-Abwasserleitung eingesaugt wird. Die Einstellung der Drosselöffnung in der Rückschlagklappe 30 kann aber auch so getroffen werden, daß das Absperrventil im wesentlichen sofort nach dem Durchlaß des abgesaugten Abwassers wieder schließt. Die geringe nachströmende Luftmenge braucht nur auszureichen, um das Abwasser bis in das mit geringem Gefälle verlegte Hausanschlußrohr gelangen zu lassen, welches in die sich längs der Straße erstreckende Hauptleitung mündet. Wahlweise kann aber auch mittels eines kleineren Lochs in der Rückschlagklappe 30 eine sehr viel längere Öffnungszeit des Absperrventils eingestellt werden, so daß bei jedem Absaugvorgang nach dem Abwasser eine ein mehrfaches von dessen Volumen betragende Luftmenge in die Unterdruck-Abwasserleitung eingesaugt wird.

Zur Betätigung der zum Öffnen und Schließen des Absperrventils erforderlichen Steuerventile ist nach oben durch die Endwand des Steigrohrs 10 hindurch aus diesem eine Steuerstange 32 herausgeführt. Wie gezeigt, ist das untere Ende der Steuerstange 32 längs verschieblich in einer mit dem steifen mittleren Teil 18 des Membrankolbens 14 fest verbundenen senkrechten Führung 34 aufgenommen. Nur am unteren Ende der Führung 34 erfolgt eine Mitnahme der Steuerstange 32 durch den Membrankolben 14 nach oben, und nur am oberen Ende der Führung 34 erfolgt eine Mitnahme der Steuerstange 32 durch den Membrankolben 14 nach unten. Dazwischen besteht ein freies senkrechtes Bewegungsspiel zwischen dem Membrankolben 14 und der Steuerstange 32, d.h., ausgehend von der gezeigten Stellung, muß sich der Membrankolben 14 erst um die Länge der Führung 34 heben, bevor auch die Steuerstange 32 nach oben mitgenommen und verschoben wird. In der obersten Stellung der Steuerstange 32 dichtet eine auf ihr sitzende Dichtung 36 die Durchführungsöffnung in der oberen Endwand des Steigrohrs 10 für die Steuerstange 32 ab. Demnach kann bei sinkendem Wasserspiegel und sich absenkendem Membrankolben 14 Luft nur über die Drosselöffnung in der Rückschlagklappe 30 in den Hohlraum 16 eindringen.

Die aus den Teilen 12 , 14, 16, 26, 30 bestehende Zeitschalteinrichtung steuert im Beispielsfall eine insgesamt aus einem Vorsteuerventil 38, einem Steuerventil 40 und einer pneumatischen Stelleinrichtung 42 für das Steuerventil 40 bestehende Ventilanordnung. Der mit A bezeichnete Eingang des Vorsteuerventils 38 ist ständig an die Unterdruck-Abwasserleitung in Fließrichtung hinter dem Absperrventil angeschlossen, steht somit ständig unter Unterdruck. Wenn sich der Membrankolben 14 bei steigendem Wasserstand um mehr als das Bewegungsspiel längs der Führung 34 hebt, wird die Steuerstange 32 nach oben mitgenommen und öffnet das durch ein Gewicht 44 vorbelastete Vorsteuerventil 38. Dadurch pflanzt sich der Unterdruck vom Ventilanschluß A durch das Vorsteuerventil 38 hindurch über den Ventilausgang B in eine Steuerleitung 46 fort, die einerseits an den Ventileingang C des Steuerventils 40 und andererseits bei E an die pneumatische Stelleinrichtung 42 angeschlossen ist. Die Steuerstange 32 wird im Beispielsfall durch einen mechanischen Schnapper 48, der z.B. die Form einer gegen einen Nocken an der Steuerstange 32 drückenden, federbelasteten Kugel haben kann, in ihrer oberen Stellung gehalten, bei welcher das Vorsteuerventil 38 geöffnet ist.

Ein ähnlicher Schnapper 50 wirkt auf die mit dem Ventilkörper des Steuerventils 40 verbundene Kolbenstange der pneumatischen Stelleinrichtung 42 und stellt einen bestimmten Widerstand dar, den die pneumatische Stelleinrichtung 42 überwinden muß, bevor das Steuerventil 40 geöffnet wird.

Im einzelnen besteht die pneumatische Stelleinrichtung 42 im Beispielsfall aus einem elastischen Kolben 52, z.B. aus Gummi, der verschieblich, aber dicht an der Zylinderwand der Stelleinrichtung 42 anliegt. Bei genügender Biegsamkeit des Kolbens 52 könnte er am äußeren Umfang auch fest mit der Zylinderwand verbunden sein. Der Kolben 52 hat eine größere wirksame Kolbenfläche als die dem Unterdruck am Ventileingang C ausgesetzte Stirnfläche des Ventilkörpers (Schiebers) des Steuerventils 40. Da beide Flächen demselben Unterdruck der Steuerleitung 46 ausgesetzt sind, zieht der Kolben 52 der pneumatischen Stelleinrichtung 42 das Steuerventil 40 in die Öffnungsstellung nach oben, sobald das Vorsteuerventil 38 durch die Steuerstange 32 geöffnet worden ist, falls der Unterdruck am Anschluß A ausreicht, um den durch den Schnapper 50 auf die Kolbenstange des Kolbens 52 ausgeübten Widerstand gegen Verschiebung zu überwinden. Damit der Schnapper 50 die Kolbenstange des gummielastischen Kolbens 52 nicht seitlich wegdrückt, sind mit der Kolbenstange oberhalb und unterhalb des mit 54 bezeichneten Nockens des Schnappers 50 im Zylinder der Stelleinrichtung 42 geführte Führungsscheiben 56, 58 verbunden.

Sobald die pneumatische Stelleinrichtung 42 den Ventilkörper des Steuerventils 40 nach oben in die geöffnete Stellung gezogen hat, gelangt der Unterdruck vom Ventileingang C zum Ventilausgang D und von dort über eine Steuerleitung 60 in bekannter Weise zum Absperrventil, welches dadurch geöffnet wird, so daß das im Sammelbehälter und Steigrohr 10 angesammelte Abwasser durch das geöffnete Absperrventil in die Unterdruck-Abwasserleitung gesaugt wird.

Wenn nach dem Sinken des Wasserspiegels im Steigrohr 10 der Membrankolben 14 infolge seines Eigengewichts, des zusätzlichen Gewichts 26 und ggf. einer Federbelastung je nach Größe der Drosselöffnung in der Rückschlagklappe 30, mehr oder weniger schnell absinkt, wird die Steuerstange 32 durch den reibungsschlüssigen Angriff des Schnappers 48 zunächst noch in ihrer oberen Stellung gehalten, so daß auch das Vorsteuerventil 38 und das Steuerventil 40 geöffnet bleiben, bis das Abwasser und ggf. noch anschließend eine bestimmte Menge Luft über das Absperrventil in die Unterdruck-Abwasserleitung eingesaugt worden sind. Nach Ablauf der durch Wahl der Größe der Drosselöffnung in der Rückschlagklappe 30 und das Gewicht 26 vorbestimmten Zeitdauer für das Absinken des Membrankolbens 14 kommt das obere Ende der Führung 34 am unteren Ende der Steuerstange 32 zur Anlage und zieht diese unter Überwindung des Widerstands des Schnappers 48 mit nach unten. Dadurch wird der Ventilkörper des Vorsteuerventils 38 in die Schließstellung zurückgeführt. Dazu kann eine feste Verbindung des Ventilkörpers des Vorsteuerventils 38 mit der Steuerstange 32 bestehen. Vorgezogen wird jedoch, wie gezeigt, eine axial verschiebliche Verbindung zwischen dem Ventilkörper des Vorsteuerventils 38 und der Steuerstange 32, derart, daß der Ventilkörper zwar in Öffnungsrichtung von der Steuerstange 32 nach oben mitgenommen wird, wobei die Halterung an der Steuerstange für den Ventilkörper z.B. an dem Gewicht 44 oder einem axialen Bund am Ventilkörper angreift, die Rückführung des Ventilkörpers in seine geschlossene Stellung jedoch allein durch die Gewichtsbelastung 44 erfolgt und die Steuerstange 32 sich ggf. auch dann noch weiter absenken kann, wenn der Ventilkörper bereits seine Schließstellung erreicht hat, wobei die ihn führende Halterung an der Steuer-stange 32 axial längs des Ventilkörpers gleitet.

Die pneumatische Stelleinrichtung 42 ist bei dem Ausführungsbeispiel nur mit einem einzigen Unterdruckanschluß E versehen und in dieser bevorzugten einfachen Ausführungsform nicht in der Lage, das Steuerventil 40 positiv in die Schließstellung zurückzuschalten. Diese Schaltbewegung wird im Beispielsfall unmittelbar durch die Steuerstange 32 ausgeführt, indem diese über einen an der Kolbenstange des Kolbens 52 und dem Ventilkörper des Steuerventils 40 angreifenden Hebel 62 diese Teile mit nach unten zieht, nachdem das Vorsteuerventil 38 geschlossen worden ist. Der Hebel 62 ist über eine Führung 64 mit axialem Bewegungsspiel mit der Steuerstange 32 verbunden, welche dafür sorgt, daß beim Anheben der Steuerstange 32 keine Mitnahme des Ventilkörpers des Steuerventils 40 über den Hebel 62 erfolgt und die Schließbewegung des Steuerventils 40 gegenüber der Schließbewegung des Vorsteuerventils 38 etwas verzögert ist.

Auch zwischen dem Hebel 62 und der mit dem Ventilkörper des Steuerventils 40 verbundenen Kolbenstange des Kolbens 52 kann eine axial verschiebliche, durch einen Anschlag begrenzte Verbindung vorgesehen sein und eine Gewichtsbelastung 66, die nach Überwindung des Verschiebewiderstands durch den Schnapper 50 beim Herabziehen des Ventilkörpers des Steuerventils 40 durch die Steuerstange 32 und den Hebel 62 den Ventilkörper in die ganz geschlossene Stellung zurückführt.

Am Vorsteuerventil 38 ist bei 68 eine Leckage angeordnet und in entsprechender Weise ist auch am Steuerventil 40 bei 70 eine Leckage vorgesehen. Diese Leckagen 68 und 70 können z.B. so ausgebildet sein, daß ein konischer Stift oder Schaft des Ventilkörpers eine mit ihm zusammenwirkende Bohrung bei geöffnetem Ventil 38 bzw. 40 fest verschließt, aber bei geschlossenem Ventil 38 bzw. 40 ein Ringspalt zwischen dem konischen Stift oder Schaft und der Bohrung offensteht, durch den Luft in die Ausgangsseite des Ventils 38 bzw. 40 einströmen kann. Die nach dem Schließen des Vorsteuerventils 38 durch die Leckage 68 in die Steuerleitung 46 einströmende Luft beseitigt das Restvakuum in der pneumatischen Stelleinrichtung 42, so daß die Steuerstange 32 das Steuerventil 40 in die geschlossene Stellung zurückführen kann. Die nach dem Schließen des Steuerventils 40 durch die Leckage 70 in die Steuerleitung 60 einströmende Luft beseitigt das Restvakuum im nicht gezeigten Absperrventil der Unterdruck-Abwasserleitung, so daß das Absperrventil wieder schließt und die Unterdruck-Abwasserleitung vom Abwasser-Sammelbehälter des Hauses abtrennt.

Bei dem gezeigten Ausführungsbeispiel sind die Ventile 38 und 40 sowie die pneumatische Stelleinrichtung 42 übereinander angeordnet. Dies muß nicht notwendigerweise so sein. Selbstverständlich kann die Steuerstange 32 auch so abgewinkelt und/oder mit seitlichen Armen versehen sein, daß die Ventile 38 und 40 nebeneinander oder in beliebiger anderer räumlicher Zuordnung angeordnet sein können.

Es versteht sich weiterhin, daß die Erfindung weder auf die dargestellte Form des Kolbens 14, noch die spezielle Ausführung der Rückschlagklappe 30 mit Drosselöffnung, noch schließlich auf die nur beispielhaft gezeigte Ausbildung und Anordnung des Vorsteuerventils 38 und des Steuerventils 4o mit pneumatischer Stelleinrichtung 42 beschränkt ist. Dem Fachmann stehen für alle diese Komponenten zahlreiche Konstruktionsvarianten zur Verfügung.

Bei dem Ausführungsbeispiel nach Fig. 2 sind die mit Fig. 1 übereinstimmenden Details mit denselben Bezugszeichen versehen. Abweichend von Fig. 1 ist jedoch nach Fig. 2 der Schwimmer 12 mit einem zweiten Membrankolben 72 verbunden, der unterhalb des ersten Membrankolbens 14 angeordnet ist und den oberen Teil des Steigrohrs 1o dicht von dessen unteren Teil abtrennt. Der Membrankolben 72 besteht im Beispielsfall aus einem scheibenförmigen steifen Mittelteil 74 und einer dicht mit diesem sowie der Mantelwand des Steigrohrs 1o verbundenen manschettenförmigen, flexiblen Membran 76. Sie ist fest und dicht zwischen einem oberen Rohrteil 11 des Steigrohrs 1o und dem sich nach unten anschließenden Hauptteil des Steigrohrs 1o eingespannt. Weiterhin ist das obere Rohrteil 11 mit einem Loch 8o zur Be- und Entlüftung des Raums zwischen den beiden Membrankolben 14 und 72 versehen.

Das steife Mittelteil 74 des Membrankolbens 72 ist auf seiner Oberseite fest mit einem Stempel 78 verbunden. In der gezeigten unteren Endstellung der Membrankolben 14 und 22 liegt die Oberseite des Stempels 78 drucklos an der Unterseite des steifen Mittelteils 18 des Membrankolbens 14 an oder befindet sich etwas unterhalb von diesem. Wird bei steigendem Wasserstand im Steigrohr 1o der Membrankolben 72 durch den Schwimmer 12 oder das zwischen dem Wasser und dem Membrankolben 72 im Steigrohr 1o eingesperrte Luftvolumen angehoben, so drückt der Stempel 78 gegen den Membrankolben 14 und nimmt diesen mit nach oben. Der Membrankolben 72 ist jedoch nicht gehindert, sich unabhängig vom Membrankolben 14 aus einer oberen Stellung wieder abzusenken.

Eine Modifikation des in Fig. 2 gezeigten Ausführungsbeispiels könnte darin bestehen, daß der Stempel 78 an der Unterseite des Mittelteils 18 des Membrankolbens 14 angebracht ist, so daß sich das Mittelteil 74 des Membrankolbens 72 beim Anheben gegen die Unterseite des Stempels anlegt und über diesen den Membrankolben 14 mitnimmt. Schließlich könnte außerdem noch eine senkrechte Führung zwischen dem Mittelteil 18 des Membrankolbens 14 und dem Mittelteil 74 des Membrankolbens 72 vorhanden sein, z.B. in Form einer auf einer Stange längsverschieblichen Büchse, wodurch der untere Membrankolben 72 noch besser an dem in senkrechter Richtung genau geführten oberen Membrankolben 14 ausgerichtet würde. Die genannte Längsführung ist jedoch nur zur Führung des unteren Membrankolbens 72 in senkrechter Richtung wirksam. Es muß weiterhin gewährleistet sein, daß der untere Membrankolben 72 über einen Anschlag bzw. einen Stempel 78 den oberen Membrankolben 14 bei der Aufwärtsbewegung mitnimmt, aber bei der Abwärtsbewegung unabhängig von dem letzteren ist und ihn gegenüber einem Unterdruck im unteren Teil des Steigrohrs 1o abschirmt. Auf die Unterseite des oberen Membrankolbens 14 wirkt jeweils nur der im Raum zwischen den beiden Membrankolben herrschende Druck, welcher durch das Loch 8o im wesentlichen gegenüber der Außenatmosphäre ausgeglichen ist.

Anstatt den Membrankolben 14 bei steigendem Wasserstand durch den Schwimmer 12 oder das im Steigrohr eingesperrte Luftvolumen anzuheben, kann auch vorgesehen sein, daß dann, wenn der Wasserstand und der Druck im Steigrohr ein bestimmtes Niveau erreicht haben, ein nicht gezeigtes Auslöserventil, wie es z.B. in der DE-PS 24 62 295 beschrieben ist, eine Vakuumleitung mit dem Hohlraum 16 verbindet, so daß dieser evakuiert und dadurch der Membrankolben 14 hochgezogen wird. Weil diese Hubbewegung eine zügig bis zur oberen Endstellung des Membrankolbens 14 durchgeführte Bewegung ist, kann der Ventilausgang B statt mit dem Ventileingang D unmittelbar mit der Leitung 6o verbunden sein, so daß das dann angeschlossene Absperrventil sofort nach dem Öffnen des Vorsteuerventils 38 geöffnet wird. Das Steuerventil 4o ist bei dieser Ausführung mit seinem Eingang C an die vom Auslöserventil zum Hohlraum 16 führende Vakuumleitung und mit seinem Ausgang D an ein zur Außenatmosphäre offenes Drosselventil angeschlossen, welches in seiner Funktion - der Drosselöffnung in der Rückschlagklappe 3o entspricht, die bei dieser Ausführung entfällt, so daß der Hohlraum 16 bis auf die genannte vakuum-Leitungsverbindung zum Auslöserventil mit Abzweigung zum Steuerventil 4o geschlossen ist.

Statt durch ein Auslöserventil kann die zum Hohlraum 16 und dem Steuerventil 4o führende Vakuumleitung auch durch ein von Hand zu betätigendes Handsteuerventil für eine bestimmte kurze Zeitdauer geöffnet werden. In dieser Ausführung eignet sich die Steuervorrichtung auch für Vakuumtoiletten.

Sogar dann, wenn der Membrankolben 14 durch Beaufschlagung des Hohlraums 16 mit Vakuum hochgesaugt wird, kann ein zweiter Membrankolben 72 verwendet werden. Es muß dann lediglich z.B. bei 78 eine leicht lösbare Haft- oder Rastverbindung zwischen den beiden Membrankolben vorgesehen werden, die in der in Fig. 2 gezeigten unteren Kolbenstellung unter der Gewichts- und/oder Federbelastung des Membrankolbens 14 einrastet und bei der Evakuierung des Hohlraums 16 den zweiten Membrankolben 72 mitnimmt, jedoch ausrastet bzw. sich löst, wenn in einer oberen Kolbenstellung der Membrankolben 72 durch Unterdruck im Steigrohr 1o nach unten gerissen wird.

## Ansprüche

1.    System zur Abförderung von Abwasser, wobei eine pneumatische Vorrichtung ein Absperrventil einer Unterdruck-Abwasserleitung steuert, welches durch ein Steuerventil (40) bei einem bestimmten maximalen Wasserstand in einem Abwasser-Sammelbehälter zu öffnen und nach einer Zeitdauer wieder zu schließen ist, welche durch die Dauer der gedrosselten Belüftung eines unter Unterdruck stehenden Hohlraums (16) bestimmt ist, **dadurch gekennzeichnet,** daß der gedrosselt belüftbare Hohlraum (16) durch den mittels eines belasteten Membrankolbens (14) dicht abgetrennten oberen Teil des Abwasser-Sammelbehälters oder eines mit diesem verbundenen Steigrohres (10) gebildet ist, der Membrankolben (14) bei steigendem Wasserstand durch vorübergehenden Anschluß einer Vakuumleitung an den Hohlraum (16), mittels eines Schwimmers (12) oder durch das Luftvolumen über dem Wasserspiegel im Abwasser-Sammelbehälter angehoben wird und gleichzeitig in entsprechendem Maße das Luftvolumen aus dem Hohlraum (16) abgeleitet wird, wobei während dieser Hubbewegung das Steuerventil (40) durch den Membrankolben (14) oder über ein durch ihn betätigbares Vorsteuerventil (38) und eine pneumatische Stelleinrichtung (42) des Steuerventils (40) umgeschaltet und nach dem Absaugen des Abwassers aus dem Sammelbehälter zurückgeschaltet wird.

2. System nach Anspruch 1, **dadurch gekennzeichnet,** daß im Sammelbehälter oder im Steigrohr (10) unter dem Membrankolben (14) ein bei steigendem Wasserstand anhebbarer zweiter Kolben (72) angeordnet ist, welcher bei seiner Hubbewegung den Membrankolben (14) durch losen Andruck von unten mitnimmt, aber unabhängig vom Membrankolben (14) absenkbar ist, und der Raum zwischen den beiden Kolben (14, 72) mit der Außenatmosphäre in Verbindung steht.

3. System nach Anspruch 1 oder 2, **dadurch gekennzeichnet,** daß auch der zweite Kolben (72) ein durch Gewicht (26) und/oder eine Feder belasteter Membrankolben ist.

4. System nach Anspruch 1, **dadurch gekennzeichnet,** daß der Membrankolben (14) über eine Steuerstange (32) mit Bewegungsspiel (bei 34) mit dem Vorsteuerventil (38) verbunden ist, welches bei angehobenem Membrankolben (14) eine Unterdruckquelle mit der pneumatischen Stelleinrichtung (42) zur Umschaltung des Steuerventils (40) verbindet.

5. System nach Anspruch 1, **dadurch gekenn-**

**zeichnet,** daß der Hohlraum (16) mit der Außenatmosphäre über eine in Strömungsrichtung von außen nach innen sperrende Rückschlagklappe (30) mit einer Drosselöffnung in Verbindung steht.

## Claims

1. A system for discharging waste water, wherein a pneumatic device controls a shut-off valve of a waste water conduit at less than atmospheric pressure, which valve is to be opened by a control valve (40) at a given maximum water level in a waste water collection tank and to be closed again after a period of time which is determined by the duration of the throttled ventilation of a cavity (16) in which an underpressure prevails, characterised in that the cavity (16), which can be ventilated in a throttled manner, is formed by the upper portion of the waste water collection tank or an ascending pipe (10) connected therewith, separated in a fluidtight manner by means of a loaded diaphragm piston (14), whereby with rising water level the diaphragm piston (14) is raised through a temporary connection of a vacuum conduit to the cavity (16), by means of a float (12) or by the air volume above the water level in the waste water collection tank, the air volume being simultaneously evacuated to a corresponding extent from the cavity (16), and during this lifting movement the control valve (40) is changed over by the diaphragm piston (14) or via a pilot valve (38) which can be actuated by the latter and a pneumatic control device (42) of the control valve (40) and is changed back after the waste water has been drained off from the collection tank.

2. A system according to Claim 1, characterised in that a second piston (72) is disposed in the collection tank or in the ascending pipe (10) below the diaphragm piston (14), which second piston can be raised with a rising water level and during its rising movement entrains the diaphragm piston (14) by loose contact from below but can be lowered independently of the diaphragm piston (14), and the space between the two pistons (14, 72) is in communication with the outside atmosphere.

3. A system according to Claim 1 or 2, characterised in that the second piston (72) is also a diaphragm piston loaded by a weight (26) and/or a spring.

4. A system according to Claim 1, characterised in that the diaphragm piston (14) is connected via a control rod (32) with free movement (at 34) relative to the pilot valve (38) which, when the diaphragm piston (14) is raised, connects an underpressure source to the pneumatic control device (42) so as to change over the control valve (40).

5. A system according to Claim 1, characterised in that the cavity (16) is in communication with the outside atmosphere via a non-return flap (30) with a throttle opening closing off in the flow direction inwardly from the outside.

**Revendications**

1. Système destiné à l'évacuation d'eaux usées, dans lequel un dispositif pneumatique commande une soupape d'arrêt d'une canalisation d'eaux usées sous dépression, qui doit s'ouvrir au moyen d'une soupape de commande (40) pour un niveau d'eau maximum déterminé dans un bassin collecteur d'eaux usées et se refermer après un temps qui est déterminé par la durée de l'aération étranglée d'une cavité (16) soumise à dépression, caractérisée en ce que la cavité (16) aérable de manière étranglée est constituée par la partie supérieure du bassin collecteur d'eaux usées séparée hermétiquement au moyen d'un piston à membrane chargé (14) ou d'un tube ascendant (10) relié au bassin, en ce que le piston à membrane (14) est, lorsque le niveau d'eau monte, soulevé à l'aide du raccordement temporaire d'une conduite sous vide à la cavité (I6), au moyen d'un flotteur (12) ou du volume d'air au-dessus du niveau d'eau dans le bassin collecteur d'eaux usées et en ce qu'en même temps le volume d'air est évacué dans une mesure correspondante de l'espace creux (16), tandis que, pendant ce mouvement à course ascendante, la soupape de commande (40) est commutée par le piston à membrane (14) ou au moyen d'une soupape de commande (38) actionnable par celui-ci et d'un dispositif de réglage pneumatique (42) de la soupape de commande (40), puis est ramenée à nouveau après l'aspiration de l'eau usée du bassin collecteur.

2. Système selon la revendication 1, caractérisé en ce qu'il est disposé dans le bassin collecteur ou dans le tuyau ascendant (10), sous le piston à membrane (14), un deuxième piston (72) pouvant être soulevé lorsque le niveau d'eau monte qui, lors de sa course, entraîne par le bas le piston à membrane (14) par contact libre mais qui peut être abaissé indépendamment du piston à membrane (14), et en ce que l'intervalle compris entre les deux pistons (14, 72) est en communication avec l'atmosphère extérieure.

3. Système selon la revendication 1 ou 2, caractérisé en ce que le deuxième piston (72) est également un piston à membrane chargé par un poids (26) et/ou un ressort.

4. Système selon la revendication 1, caractérisé en ce que le piston à membrane (14) est relié par une tige de commande (32), pourvue d'un jeu de déplacement (en 34), à la soupape de précommande (38), qui, lorsque le piston à membrane (14) est soulevé, relie une source de dépression au dispositif de réglage (42) pneumatique pour commuter la soupape de commande (40).

5. Système selon la revendication 1, caractérisé en ce que la cavité (16) est en communication avec l'atmosphère extérieure au moyen d'un clapet de retenue (30) pourvu d'un orifice d'étranglement qui bloque dans le sens de l'écoulement de l' extérieur vers l'intérieur.

Fig.1

Fig.2